# EUROPÄISCHE PATENTSCHRIFT

(11) **EP 3 061 528 B1**
(45) Veröffentlichungstag und Bekanntmachung des Hinweises auf die Patenterteilung: **05.12.2018**
(21) Anmeldenummer: 16157899.2
(22) Anmeldetag: 29.02.2016
(51) Int. Cl.: B02C 17/16, B01F 7/00, F16D 1/112

(54) **DISPERGIEREINHEIT MIT EINER EINFACH WECHSELBAREN FEINDISPERGIEREINHEIT**
DISPERSING UNIT WITH AN EASILY INTERCHANGEABLE FINE DISPERSING UNIT
UNITE DE DISPERSION AVEC UNE UNITE DE DISPERSION FINE FACILEMENT AMOVIBLE

(30) Priorität: 27.02.2015 DE 202015100951 U
(43) Veröffentlichungstag der Anmeldung: 31.08.2016
(73) Patentinhaber: VMA-Getzmann GmbH Verfahrenstechnik, 51580 Reichshof (DE)
(72) Erfinder: Finster, Carsten, 42499 Hückeswagen (DE); Vierschilling, Klaus, 51580 Reichshof (DE); Hartmann, Lars, 51645 Gummersbach (DE)
(74) Vertreter: Lippert Stachow Patentanwälte Rechtsanwälte

(56) Entgegenhaltungen:
- EP-A2- 0 225 495
- WO-A1-2006/018168
- DE-A1- 4 013 968
- DE-A1- 4 425 906
- GB-A- 1 218 118

## Beschreibung

Die Erfindung betrifft eine Dispergiereinheit mit einem Stativ ausgebildet zum höhenverstellbaren Halten eines Motorkopfs/Maschinenhalters mit einem darin angeordneten Motor. Dieser Motor treibt eine sich in Einbaulage vorzugsweise vertikal erstreckende Antriebswelle an, die in einem Lagerflansch zur Lagerung der Welle aufgenommen ist, der mit einem in Einbaulage oberen Ende mit dem Motorkopf verbunden ist und an einem in Einbaulage unteren Ende ein Tragelement aufweist. Die Welle ist ausgebildet zum Antrieb einer Dispergiervorrichtung, die über ein Gestänge mit dem Tragelement verbindbar ist. Die Dispergiervorrichtung kann zur Vor- und/oder Feindispergierung ausgebildet sein.

### Stand der Technik

Eine solche Dispergiereinheit verteilt fein- und feinstteilige, feste Bestandteile in der flüssigen Phase. Dabei laufen grundsätzlich drei Teilschritte nebeneinander ab:
1. Die Benetzung der Oberfläche des einzuarbeitenden Feststoffes durch flüssige Bestandteile des Dispergierguts;
2. die mechanische Zerteilung von Agglomeraten in kleinere Agglomerate und Primärartikel und
3. die Stabilisierung von Primärartikeln, Agglomeraten und Aggregaten gegen erneute Zusammenlagerung (= Flockung).

Obwohl sich die nachstehenden Ausführungen überwiegend auf die Dispergierung von Farben und Lacken beziehen, lässt sich diese Verfahrenstechnik analog auch auf andere Bereiche (z.B. Biologie, Lebensmitteltechnologie, Pharmazie, Agrochemie, keramische Industrie u.a.) übertragen.

Beim Dispergieren bzw. dem Herstellen von gemahlene Stoffe enthaltende Produkte, also insbesondere z.B. Farben, Schmierstoffe, Klebstoffe und technische Keramikenist es wirtschaftlich wünschenswert, den Einsatz der kostenintensiveren Primärteilchen so gering wie möglich zu halten. Die Farbwirkung und der Glanz werden umso intensiver, je besser dispergiert wird. Durch eine gute Dispergierung kann also z.B. der Einsatz der kostenintensiven farbgebenden Primärteilchen durch die kostengünstigeren Sekundärteilchen verringert werden. Im Idealfall ist jedes Primärteilchen separat benetzt.

Zur Verbesserung der Wirtschaftlichkeit des Dispergierprozesses ist eine Vordispergierung des Dispergierguts sehr zweckmäßig, wozu vorzugsweise ein Dissolver umfassend eine durch eine Welle angetriebene Dissolverscheibe verwendet wird, da diese bereits relativ schnell eine Vorauflösung von schwer dispergierbaren Agglomeraten vornimmt. Ein ungenügend vordispergiertes Produkt erfordert nicht nur längere Laufzeiten der Mahlvorrichtung, sondern es werden oft nicht die erwünschten Feinheiten erreicht. Versäumnisse oder Fehler bei der Vordispergierung können in der Regel nicht durch andere Systeme ausgeglichen werden; insbesondere deshalb nicht, weil unzureichend vordispergierte Produkte bei der weiteren Verwendung einer als Mahlvorrichtung ausgebildeten Dispergiervorrichtung das Zusetzen der Löcher des Siebkorbs der Mahlvorrichtung bewirken, wodurch die Zirkulation durch den Siebkorb erschwert oder vollständig verhindert wird.

Bei Produktionsmaschinen der Dispergiertechnik, also Anlagen mit einem Behältervolumen von größer 30 Litern bzw. mit einer Antriebsleistung von größer 5kW, werden z. B für das Herstellen von Lacken und Farben regelmäßig zwei Verfahrensschritte zur Erzielung der erforderlichen Qualität des verarbeiteten Produktes eingesetzt. Dem Stand der Verfahrenstechnik entsprechend wird das zu verarbeitende Produkt zuerst mit einer Vordispergiereinheit vordispergiert, die üblicherweise als Dissolver ausgebildet ist. Um eine weitere verbesserte Partikelzerkleinerung zu erreichen, wird der vordispergierte Ansatz im Rahmen der Feindispergierung sodann mit Feindispergiereinheit weiter zerkleinert. Für den zweiten Verfahrensschritt, der Zerkleinerung im Rahmen der Feindispergierung (auch Feinmahlen genannt) existieren unterschiedliche Arten von Mühlen, z.B. horizontale Perlmühlen und Korb- oder Tauchmühlen.

### Technisches Problem

Zwei getrennte Geräte, also ein Dissolver und eine Feindispergiereinheit benötigen viel Produktions- bzw. Lagerraum und sind Aufwändig beim Produkt- und/oder Chargenwechsel.. Bei Kombigeräten, also z.B. die in der WO 2006/018168 der Anmelderin offenbarte Dispergiereinheit mit einem Dissolver und einer Rührwerkskugelmühle ist der Verbleib der Feindispergiereinheit, vorzugsweise ausgebildet als Mahlkorb, im Produktionsbereich oben im Behälter zur Aufnahme des Dispergierguts nachteilig, in welchem also die Dispergierung durchgeführt wird. Für Dispergieraufgaben, bei welchen ausschließlich ein Dissolver benötigt wird, erfordert diese Ausbildung unnötig hohe Behälter für die Parkposition der Feindispergiereinheit oberhalb des Behälters, wenn diese also aus dem Behälter ausgefahren bzw. entfernt ist.

Ein weiteres Problem stellt die Verschmutzung der ungenutzten Feindispergiereinheit dar, welche bei der Produktion auftritt. Dies ist insbesondere nachteilig, wenn der Einsatz der Feindispergiereinheit, z.B. einer Korbmühle, nur sporadisch erforderlich ist und mehrheitlich nur mit dem Dissolver zur Vordispergierung gearbeitet wird.

Weiterhin hat sich bei Kombimaschinen gezeigt, dass der hohe technische Aufwand, z.B. für die Positionierung des Mahlwerkzeugs in der angehobenen Stellung, für die zuschaltbaren Feindispergiereinheit, diese Maschinen relativ teuer machen.

Eine den speziellen Anforderungen an die Herstellung unterschiedlicher Dispersionen angepasste Feindispergiereinheit, z.B. Mahlkörbe mit unterschiedlichen Auskleidungen keramischer Art oder mit Kunststoffen, kann nur durch aufwendigere Montage erfolgen.

Bisherige Lösungsversuche im Technikum, also mit kleineren Maschinen mit einem Fassungsvermögen bis 30 Litern, basieren auf der Demontage der gesamten Feindispergiereinheit mit Wellenlagerung, Welle und Deckel vom Motorkopf bzw. von dessen Unterseite. Dieses ist bei Produktionsmaschinen mit einem Produktionsvolumen bzw. Fassungsvermögen von 100 Litern aufwärts aufgrund des Gewichts, der Abmessungen und der Komplexität der Maschinen, insbesondere aufgrund der Antriebstechnik, nicht möglich.

Der Erfindung liegt demnach die technische Problemstellung zugrunde, eine eingangs genannte Dispergiereinheit derart weiterzuentwickeln, dass zuvor genannte Nachteile zumindest teilweise vermieden werden und insbesondere ein einfacher Wechsel sowohl zwischen Vor- und Feindispergierung als auch zwischen verschiedenen Produktionsprozessen ermöglicht wird. Schließlich sollen die Durchlaufzeiten reduziert werden, also die Stillstandzeiten sowie die Zeit für die Reinigung und den Produktwechsel reduziert werden. Daneben sollen Kreuzkontamination (Verunreinigung bei Farbwechsel) beim Chargenwechsel reduziert werden.

Schließlich hat sich gezeigt, dass viel Lagerraum, z.B. für die Lagerung der Mahlwerkzeuge, sowie die zuschaltbaren Aggregate für die Feindispergiereinheit, erforderlich ist.

### Lösung

Diese Aufgabe wird bei einer Dispergiereinheit der eingangs genannten Art durch die Merkmale des kennzeichnenden Teils von Anspruch 1 gelöst. Bevorzugte Weiterentwicklungen sind in den Unteransprüchen wiedergegeben.

In der einfachsten Ausführungsform zeichnet sich die Dispergiereinheit dadurch aus, dass diese für den Produktionsbereich ausgebildet ist und dass diese an dem Tragelement angeordnete Schnellwechselmittel zur lösbaren Befestigung der Dispergiervorrichtung umfasst. Damit weist diese ein Behältervolumen größer 30 Litern bzw. eine Antriebsleistung größer 5 kW auf.

Durch diese Ausgestaltung wird somit ein schnelles und einfaches Wechseln und eine Anpassung der Dispergiervorrichtung ermöglicht, die den besonderen Anforderungen bei den Gewichten im Produktionsbereich mit schweren Bauteilen Rechnung trägt. Durch die erfindungsgemäße Lösung ist es erstmalig möglich, allein durch das Lösen der Schnellwechselmittel die Dispergiervorrichtung von der Dispergiereinheit zu trennen, und zwar bei deutlich geringerem Aufwand für Umbau und Reinigung beim Produktwechsel. Dieses kann sogar durch eine Person erfolgen, indem die Dispergiervorrichtung auf der unter dieser angeordneten Transportaufnahme aufgesetzt wird, um sodann in abgesenkter Stellung die Schnellwechselmittel zu lösen und die Dispergiervorrichtung durch einfaches Verschieben der Transportaufnahme gegen eine andere auswechseln zu können.

Erfindungsgemäß wird die Trennebene somit vom unteren Ende des Motorkopfes bzw. Maschinenhalters an die durch das Tragelement definierte Ebene verlegt, die im Sinne der Erfindung als "Wechselebene" bezeichnet wird. Somit bildet das Tragelement am unteren Ende des Lagerflansches die Wechselebene zum lösbaren Befestigen der Dispergiervorrichtung. Diese üblicherweise im Bereich der Brusthöhe einer Person liegende Wechselebene verbessert in entscheidender Weise die Bedienbarkeit von schweren Produktionsmaschinen und vereinfacht somit den Produktwechsel erheblich, was wiederrum die Durchlaufzeiten und somit die Kosten reduziert.

Durch diese überraschend einfache Lösung werden aber entscheidende Vorteile erzielt, nämlich insbesondere, aber nicht-ausschließlich:
- Einsatz sowohl für die Vordispergierung, insbesondere mittels eines Dissolvers, und wahlweise oder zusätzlich auch für die Feindispergierung, z.B. mittels einer Korbmühle. Somit ist nur noch eine Dispergiereinheit für die Vor- und Feindispergierung in der Produktion erforderlich, was die Anschaffungs-, Wartungs- und Raumkosten reduziert;
- deutliche Reduzierung der Stillstandszeit für die aufwendige Reinigung und Umrüstung;
- Möglichkeit der Nutzung ausschließlich zur Vordispergierung ohne Feindispergiereinheit im Produktraum und somit vergrößertem Produktvolumen bei gleicher Höhe des Behälters;
- gegenüber Dispergiereinrichtungen, welche in eine Vordispergier- und Feindispergiereinheit in einer Einheit als feste Bestandteile enthalten, sind keine Hubeinrichtungen und Führungen erforderlich, was die Komplexität erheblich reduziert;
- Wegfall von Steuerungskomponenten/Sensorik/Funktionen und Verriegelungen für den Hebe- und Senkvorgang der Feindispergiereinheit des Mahlkorbes. Die zusätzliche Lagerung der Mahlscheibe ist nicht mehr erforderlich und das aufwendige Kupplungssystem zur Kraftübertragung zur Mahlscheibe entfällt;
- modularer Aufbau und somit spätere Nachrüstbarkeit einer Feindispergiereinheit zusätzlich zur Vordispergiereinheit;
- schnelles Umrüsten von verschiedenen Feindispergiereinheiten, insbesondere zur Verwendung mit Auskleidung, z.B. mit Keramik, Kunststoffen oder ähnliches (wasser- oder lösemittelbasierte Medien);
- Vermeiden von Kreuzkontamination (Verunreinigung) bei Produktwechseln durch wechselweisen Einsatz mehrerer Feindispergiereinheiten;
- Weil der Deckel nicht gewechselt werden muss, ist ein Vakuumbetrieb und/oder der Einsatz von Produktabstreifern wesentlich einfacher. Bei aus dem Stand der Technik bekannten Produktionsmaschinen war es bislang notwendig, alle Zuführungseinrichtungen für die Produkte und/oder Medien, wie Wasser, Luft usw., bei der Demontage zu entfernen, den Deckel abzubauen und den Motorkopf sodann nach oben zu verfahren, um den Feindispergiereinheit wechseln zu können. Da durch die Erfindung nur noch die Feindispergiereinheit abgesenkt und weggefahren werden muss, können diese Anschlüsse, Zuführungseinrichtungen und Zusatzbauteile, wie die Ansteuerung, Endschalter, Leitungen, Sensoren und Anschlüsse an dem Deckel und/oder dem Tragelement angeschlossen bzw. mit diesem verbunden bleiben. Erst durch die erfindungsgemäße Verlagerung der Trenn- bzw. Wechselebene von der Unterseite des Maschinenkopfes an das Unterende des Tragelements können alle Zuführungsleitungen und Anschlüsse an dem Deckel am oberen Teil der Dispergiereinheit angeschlossen bleiben. Eventuelle notwendige Durchgänge oder Öffnungen können beim Vakuumbetrieb mit Stopfen und/oder Dichtungen abgedichtet werden. Dieses ist bei Dispergiereinheiten für den Produktionsbereich mit typischen Antriebsleistungen größer 5kW erstmalig durch die erfindungsgemäße Ausbildung möglich.
- Während dem Umrüstvorgang kann die Feindispergiereinheit somit völlig geschlossen bleiben. Durch die neuartige Arretierungsvorrichtung der Mahlscheibenaufnahme kann der Mahlkorb in geschlossenem Zustand ohne das vorherige Entfernen der Siebronde, der Mahlperlen und der Mahlscheibe mit dem Dichtungssystem von der Antriebswelle getrennt werden.
- Die Feindispergiereinheit oder nur Bestandteile von dieser können durch Absenken des Antriebskopfes abgesenkt werden, vorzugsweise auf eine weiter unten beschriebene Transportaufnahme. Diese Transportaufnahme ist vorzugsweise mit einer Federung ausgestattet, welche die Ungenauigkeit der Positionierung beim Senkvorgang ausgleicht.

Vorteilhaft ist bei der vorgeschlagenen Lösung auch, dass ein Abstreifer im Bereich oder an der Wechselebene montiert werden kann, so dass dieser bei der Demontage nicht demontiert werden muss.

Bei einer bevorzugten Ausbildung umfasst das Tragelement mindestens eine, zur Erhöhung der Stabilität vorzugsweise zwei in Längsrichtung des Lagerflansches voneinander beabstandete Platten auf.

Bei der bevorzugten Ausführungsform umfassen die Schnellwechselmittel form- und/oder kraftschlüssig wirkende Befestigungsmittel, besonders bevorzugt Bajonettverschlüsse. Diese Bajonettverschlüsse können z. B. eine Kulissenführung umfassen, also eine Führung von bestimmter Geometrie aufweisen, z.B. in Form einer Nut, in welche in Einbaulage außenseitig an dem Gestänge vorgesehene Stifte eingreifen. Jedoch sind auch anders ausgebildete Schnellwechselsysteme möglich, z. B. eine Klemm- oder Schraubverbindung.

Erfindungsgemäß kann an der Wechselebene neben den Schnellwechselmitteln auch ein Deckel oder eine Abdeckung eines Behälters vorgesehen sein, der zusammen mit der Dispergiervorrichtung mit dem Maschinenhalter vertikal auf einem Behälter zur Aufnahme des Dispergiergutes absenkbar ist.

Zur weiteren Vereinfachung des Wechsels zwischen Vor- und Feindispergierung kann das Tragelement eine Drehverriegelung umfassen, mit der ein gleichzeitiges Arretieren und Lösen aller an der Trennebene ausgebildeten Befestigungspunkte der Feindispergiereinheit ermöglicht wird.

Beispielsweise kann diese Drehverriegelung eine Drehplatte zur Aufnahme der Stangen des Mahlkorbs umfassen; durch Drehung der Drehverriegelung aus einer Verriegelungs- in die Entriegelungsstellung kann somit ein gleichzeitiges Lösen aller Stangen des Mahlkorbs realisiert werden und umgekehrt.

Bei der bevorzugten Ausführungsform einer solchen Produktionsmaschine umfasst der Motorkopf einen Hülltrieb zum Antrieb der Welle, wobei der Hülltrieb also zwischen dem Elektromotor und der sich vorzugsweise vertikal erstreckenden Welle erstreckt und somit das Drehmoment von dem Motor auf die Welle überträgt. Besonders bevorzugt umfasst der Hülltrieb einen Zahnriemen. Ein Direktantrieb der Welle über den Motor ist aber selbstverständlich ebenfalls möglich.

Bei der bevorzugten Ausführungsform ist die Feindispergiereinheit als Perl- oder Kugelmühle ausgebildet, welche vorzugsweise einen zylindrischen, insbesondere am Boden und an der äußeren Mantelfläche durchsiebten Mahlkorb zur Aufnahme von Perlen oder Kugeln umfasst, in denen ein Mitnehmer mit Stangen oder Scheiben durch die Welle angetrieben rotiert. Es liegt jedoch ebenfalls im Rahmen der Erfindung, dass die Feindispergiereinheit als Stator/Rotor ausgebildet ist.

Vorzugsweise ist das Gestänge zur Befestigung der Feindispergiereinheit an der Wechselebene des Tragelements 3-teilig ausgebildet, umfasst also drei Einzelstäbe oder -stangen, die vorzugsweise um jeweils 120° versetzt zueinander im Kreis angeordnet sind und mit ihrem oberen Ende das Tragelement bzw. die Wechselebene durchdringen und am unteren Ende mit der Feindispergiereinheit verbunden sind. Bei der bevorzugten Ausführungsform sind die Stangen hohl ausgebildet und können insofern Medien, wie Kühlmittel zur Kühlung in Feindispergiereinheit übertragen. Hierzu sind vorzugsweise am oberen Ende der Stangen Stangenanschlüsse vorgesehen, z.B. Schlauchanschlüsse.

Bevorzugt ist somit für die Medienleitung ebenfalls eine Schnellkupplung am oberen Ende des Gestänges vorgesehen, welche beim Lösen der Feindispergiereinheit gleichzeitig ein einfaches und schnelles Lösen der Medienleitungen ermöglicht.

Nach dem Absenken des Motorkopfes mit der befestigten Feindispergiereinheit in den Transportwagen, werden die erfindungsgemäßen Schnellverschlüsse an der Wechselebene entriegelt, z. B. durch eine Drehbewegung, so dass das Gestänge und damit die ganze Feindispergiereinheit entfernbar ist.

Durch die neuartige Arretiervorrichtung der Mahlscheibenaufnahme kann der Mahlkorb im geschlossenen Zustand ohne das vorherige Entfernen der Siebronde, der Mahlperlen und der Mahlscheibe mit dem Dichtungssystem von der Antriebswelle getrennt werden.

Im nachfolgenden Schritt wird der Antriebskopf nun ohne Feindispergiereinheit angehoben und mit der Antriebswelle aus dem Bereich der Feindispergiereinheit entfernt. Sodann kann die Maschine durch Anbringen einer Vordispergiereinheit, z.B. einer Dissolverscheibe oder einer anderen Dispergiereinrichtung in einem anderen Verfahrensschritt genutzt werden.

Bei der konkreten Verwendung wird zunächst eine vorzugsweise als Dissolverscheibe ausgebildete Vordispergiereinheit, die gleichzeitig als Strömungserzeugungsvorrichtung fungieren kann, unterhalb der Feindispergiereinheit, vorzugsweise ausgebildet als Mahlkorb, demontiert und sodann von den Medienanschlüssen getrennt. Bei der Demontage kann der komplett geschlossene Mahlkorb oder alternativ auch nur Teile davon durch Absenken des Antriebkopfes auf die Transportaufnahme abgesenkt werden.

Bei der bevorzugten Ausführungsform umfasst die Dispergiereinheit eine von dem Motor angetriebene Welle, welche zum einen die vorzugsweise als Dissolver ausgebildete Vordispergiereinheit antreibt. Der Dissolver ist dabei insbesondere ausgebildet als eine am unteren Ende der Welle angeordnete und sich quer zu deren Längserstreckungsrichtung erstreckende Scheibe, die an ihrem Umfangsrand alternierende nach oben und unten umgekantete Flügelelemente aufweist.

Die Feindispergiereinheit ist bei einer bevorzugten Ausführungsform als kreisringförmiger Mahlkorb ausgebildet, der in Einbaulage die Welle ringförmig umschließt und im Verhältnis zu der stationären Welle ebenfalls höhenverstellbar sein kann, um diese nach der Vordispergierung mit dem Dissolver für die Feindispergierung in dem Mahlgut absenken zu können. Die Welle zum Antrieb der Vordispergiereinheit kann zudem in einer weiteren Ausgestaltung eine diese Welle umschließende Hohlwelle umfassen, welche über eine Kupplung getrennt oder zusammen von der Welle antreibbar ist zur Bewegung der in der Feindispergiereinheit angeordneten Mitnehmer, vorzugsweise ausgebildet als Scheiben oder Stangen, die dann sich also relativ zu dem stationären Gehäuse bzw. Mahlkorb der Feindispergiereinheit zusammen mit entweder der Welle oder der Hohlwelle drehen.

Die Erfindung betrifft insofern auch, und zwar auch getrennt von der Dispergiereinheit an sich, eine Transportaufnahme für die Aufnahme und den Transport der Feindispergiereinheit nach dem Lösen von der Dispergiereinheit. Diese Transportaufnahme für die Feindispergiereinheit in abgesenkter Stellung, welche vorzugsweise Hebemittel zur Höhenanpassung und Ausgleich möglicher Ungenauigkeiten umfasst, also zum Anheben der Feindispergiereinheit aus einer abgesenkten Position in die angehobene Position. Zudem kann diese Dämpfungsmittel umfassen, insbesondere Federelemente, bevorzugt umfassend Kraftzylinder.

Bei der bevorzugten Ausführungsform umfasst die Transportaufnahme in vertikaler Richtung fungierende Kraftzylinder, z.B. ausgebildet als Pneumatik- oder Hydraulikzylinder, welche so zwischen einer unteren, an ihrer Unterseite mit Rollen versehenen Stationärplatte und einer oberhalb der Stationärplatte und in einem Abstand zu dieser angeordneten Hebeplatte wirken, welche die Hebeplatte also relativ zu der unteren Stationärplatte für die Befestigung an dem Tragelement der Dispergiereinheit anheben lässt.

In der folgenden ausführlichen Beschreibung wird auf die beigefügten Zeichnungen Bezug genommen, die Teil dieser bilden und in denen zur Veranschaulichung eine spezifische Ausführungsform gezeigt ist, in der die Erfindung ausgeübt werden kann. In dieser Hinsicht wird Richtungsterminologie wie "oben", "unten", "vorne", "hinten", "vorderes", "hinteres" usw. in Bezug auf die Orientierung der beschriebenen Figur(en) verwendet. Da Komponenten von Ausführungsformen in einer Anzahl verschiedener Orientierung positioniert werden können, dient die Richtungsterminologie nur der Veranschaulichung und ist auf keinerlei Weise einschränkend zu verstehen. Es versteht sich, dass andere Ausführungsformen benutzt und strukturelle oder logische Änderungen vorgenommen werden können, ohne vom Schutzumfang der vorliegenden liegenden Erfindung abzuweichen. Die im Rahmen dieser Beschreibung verwendeten Begriffe "verbunden", "angeschlossen" sowie "integriert" sind im Sinne einer direkten als auch einer indirekten Verbindung zu verstehen, eines direkten und indirekten Anschlusses sowie einer direkten oder indirekten Integration. Die Darstellungen in den Figuren sind im Wesentlichen maßstäblich. Zur Veranschaulichung sind Details und bestimmte Bereiche für den Fachmann erkennbar übertrieben dargestellt. Darüber hinaus können die Zeichnungen plakativ vereinfacht sein und enthalten nicht jedes bei der praktischen Ausführungsform gegebenenfalls vorhandene Detail.
- Figur 1A:: eine Seitenansicht der Dispergiereinheit in der angehobenen Position mit der darunter angeordneten Transportaufnahme;
- Figur 1B:: eine vergrößerte Seitenansicht eines Schnellverschlusses in Schließstellung;
- Figur 2A:: die Seitenansicht der Dispergiereinheit in der gegenüber der Darstellung in Fig. 1A absenkten Position mit dem Mahlkorb eingesetzt in die Transportaufnahme;
- Figur 2B:: eine vergrößerte Seitenansicht des Schnellverschlusses gemäß Fig. 1B;
- Figur 3A:: die Dispergiereinheit gemäß Figur 2A in abgesenkter Position;
- Figur 3B:: einen vergrößerten Schnellverschluss beim Entriegeln in dieser Position;
- Figur 4A:: eine Seitenansicht der Dispergiereinheit in wieder angehobener Position und von der Trennebene gelösten Mahlkorb, aufgesetzt auf der Transportaufnahme;
- Figur 4B:: eine Seitenansicht des Schnellverschlusses sowie des oberen Endes einer aus dem Schnellverschluss gelösten Stange, also bei demontierter Feindispergiereinheit;
- Figur 5:: eine Seitenansicht der Darstellung gemäß Figur 4 mit dem Stativ,
- Figur 6A:: eine Seitenansicht einer zweiten Ausführungsform einer erfindungsgemäßen Dispergiereinheit mit einem Deckel und einer Drehverriegelung an der Trennebene in Verriegelungsstellung;
- Figur 6B:: eine Draufsicht auf den Deckel und das Tragelement in der Verriegelungsstellung gemäß Fig. 6A;
- Figur 7A:: eine Seitenansicht der Dispergiereinheit gemäß Figur 6A mit der Drehverriegelung in der Entriegelungsstellung und somit gelöster Feindispergiereinheit; und
- Figur 7B:: die Draufsicht gemäß Figur 6B in der Entriegelungsstellung.

In den Figuren werden identische oder ähnliche Elemente mit identischem Bezugszeichen versehen, soweit dies zweckmäßig ist.

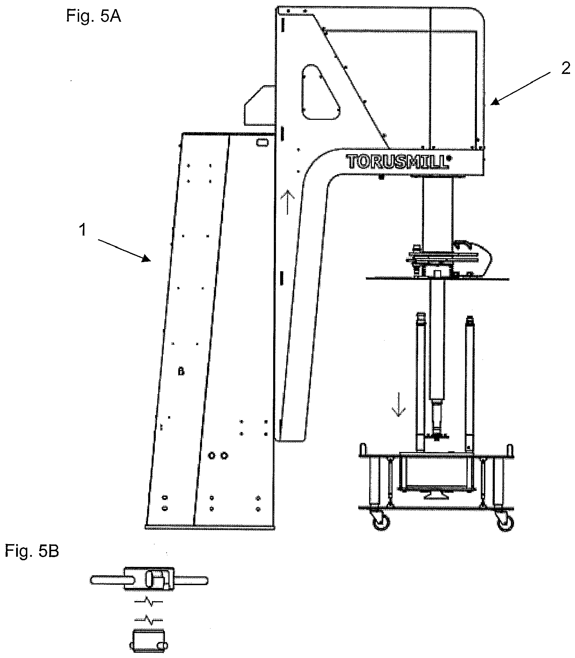

Demnach besteht die Dispergiereinheit im Wesentlichen aus dem zur Vereinfachung nicht dargestellten, sich vertikal erstreckenden und auf dem Boden aufsitzenden Stativ 1, das an seinem oberen Ende einen vertikal höhenverstellbaren Motorkopf 2 umfasst und nur in Figur 5 dargestellt ist.

Der Motorkopf 2 umfasst eine Verkleidung, in der ein Elektromotor aufgenommen ist, welcher seinerseits eine sich ebenfalls vertikal erstreckende Welle 4 antreibt, der am unteren Ende des Motorkopfes 2 in einem hohlzylindrischen Lagerflansch 6 gelagert ist. Dieser Lagerflansch 6 umfasst an seinem in Einbaulage oberen Befestigungsende einen mit der Unterseite des Motorkopfes 2 verschraubten Befestigungsflansch 6a und an seinem in Einbaulage unteren Ende ein zwei zueinander beabstandeten Stahlplatten gebildetes ausgebildetes Trageelement 8, welches vorliegend quer erstreckend zur Längsachse der Welle 4 und des Lagerflansches 6 verläuft und somit die Wechselebene definiert.

An diesem Tragelement 8 ist eine als Mahlkorb 10 ausgebildete Feindispergiereinheit in der erfindungsgemäßen Art und Weise lösbar befestigt. An der Oberseite des kreisringförmigen Mahlkorbs 10, durch dessen mittige Öffnung sich die Welle 4 erstreckt, sind drei um jeweils 120° zueinander versetzt angeordnete Stangen 12A, 12B zur Bildung eines vertikal von der Oberseite des Mahlkorbs 10 nach oben sich erstreckenden Gestänges angeordnet. Das Gestänge ist vorliegend also Bestandteil des Mahlkorbs 10 und fest mit diesem verbunden.

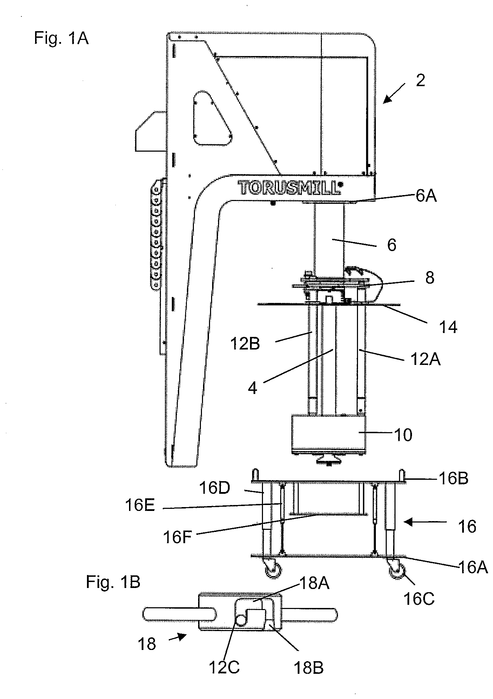

Bei dieser in den Figuren 1A und 1B dargestellten angehobenen Position ist ein ebenfalls nicht dargestellter Behälter von unterhalb der Dispergiereinheit entfernt worden, der in Schließstellung durch einen unterhalb des Tragelements 8 ebenfalls befestigten und lediglich schematisch dargestellten Deckel 14 verschließbar ist.

Bei der in der Figur 1A dargestellten Position ist der Mahlkorb 10 insofern oberhalb von der Transportaufnahme 16 angeordnet, die eine aus einer Stahlplatte gebildeten Unterplatte 16A und eine sich parallel zu dieser Unterplatte 16A erstreckende Hubplatte 16B umfasst. Unterhalb der Unterplatte 16A sind jeweils in den Ecken vier verschwenkbar angelenkte Rollen 16C befestigt. Zwischen der Unterplatte 16A und der Hubplatte 16B erstrecken sich in den Ecken vertikal quer zu den Ebenen der Platten 16A und 16B vier teleskopierbare Führungszylinder 16D kombiniert mit Kraftzylindern 16E. Mittig weist die Hubplatte 16B eine mit dem Außendurchmesser des Mahlkorbs 10 korrespondierende Öffnung auf, durch welche der Mahlkorb 10 auf eine Aufsatzplatte 16F für den Transport aufsetzbar ist, die sich über Distanzstangen gehalten parallel unterhalb der Hubplatte erstreckt.

In der vergrößerten Seitenansicht der vorzugweise als Bajonettverschluss 18 ausgebildeten Schnellwechselvorrichtung gemäß Figur 1A ist eine jeweils am oberen Ende der Stangen 12A, 12B radial abragende Führungsstange 13 in der Arretierstellung innerhalb des Bajonettverschluss angeordnet. Dieser Bajonettverschluss umfasst ein zylindrisches Mittelteil mit einer Führungskulisse 18A in der äußeren Mantelfläche. Die Führungskulisse 18A weist damit im Wesentlichen die Gestalt eines Hakens oder umgedrehten U's auf mit einem Eingang 18B am unteren Ende und dem Sackloch am hinteren Arretierende auf, zwischen denen sich ein Vorsprung in der Mangelfläche des Bajonettverschlusses nach oben ragend erstreckt.

In der in Fig. 1B dargestellten Position sitzt die radial von der Längsachse der Stange 12A abragende Führungsstange 13 somit unverlierbar fixiert in einem Sackloch am Ende der Führungskulisse 18A.

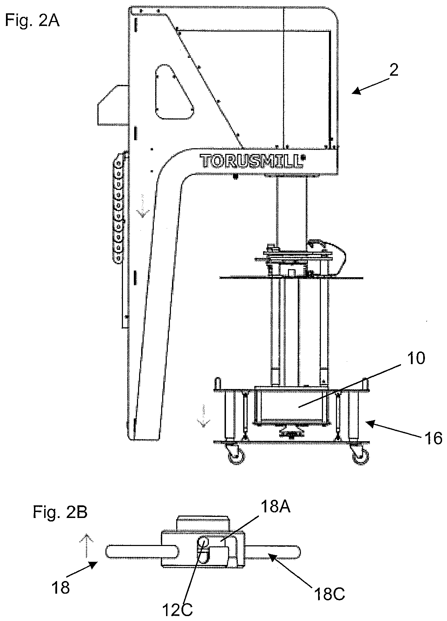

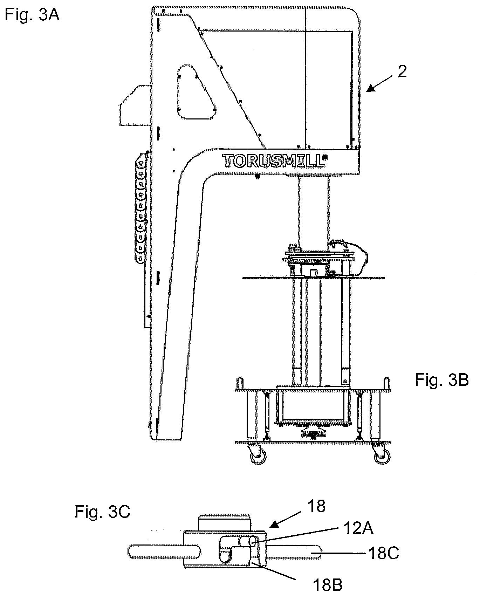

Gemäß den Figuren 2A und 2B wurde der Motorkopf 2 gegenüber der angehobenen Position in die Wechselstellung abgesenkt, so dass auch der Mahlkorb 10 nunmehr auf der Aufsatzplatte 16F der Transportaufnahme 16 aufsitzt. Durch das Gewicht des Mahlkorbs 10 wurden die Kraftzylinder 16D sowie die Federstange 16E zusammengedrückt. Durch das Absenken des Mahlkorbs 10 wird die Führungsstange 13 aus der Arbeitsposition in dem Sackloch am Ende der Führungskulisse 18A des Bajonettverschlusses 18 gehoben, so dass der Bajonettverschluss 18 gemäß der Darstellung in Figur 3B nunmehr durch Drehung an der radial von der Mantelfläche des inneren Zylinderelements abragende Betätigungsstangen 18C drehbar ist, um die Führungsstange 12A über den Vorsprung hinwegzudrehen und in den Eingang 18B der Führungskulisse 18A zu überführen.

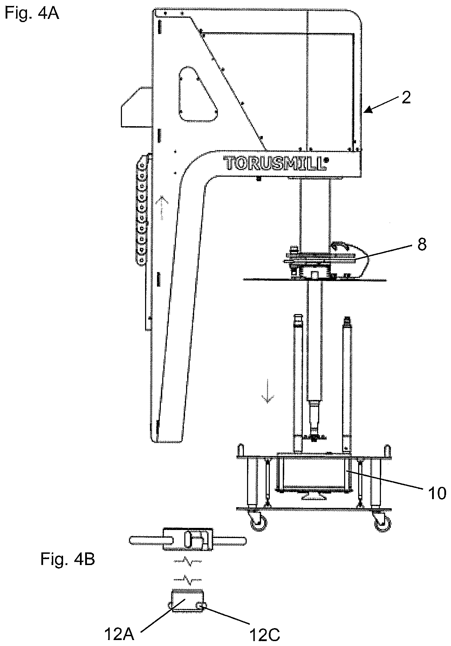

Somit kann nun durch vertikales Anheben des Motorkopfes 2 gemäß den Darstellungen in den Figuren 4A und 4B die Führungsstange 13 am oberen Ende der Stange 12A aus der Führungskulisse 18A austreten und somit sich der Mahlkorb 10 von dem Tragelement 8 der Dispergiereinheit lösen, so dass dieser ausgewechselt oder gereinigt werden kann. Das Mahlsystem bzw. der Mahlkorb 10 ist insofern demontiert.

Bei allen Darstellungen wurde eine am unteren Ende der Welle 4 angeordnete Dissolverscheibe, welche sich in Einbaulage unterhalb des Mahlkorbs 10 quer zu dessen Längsachse erstreckt, bereits entfernt.

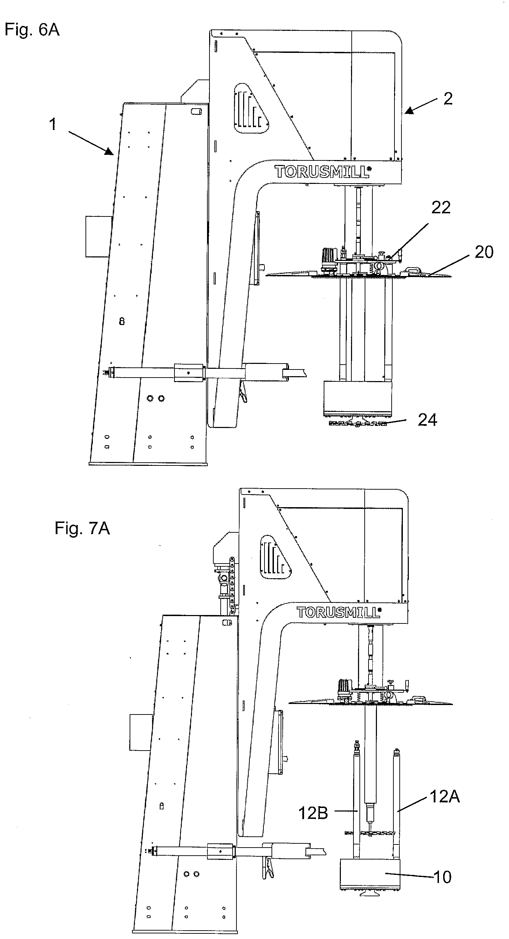

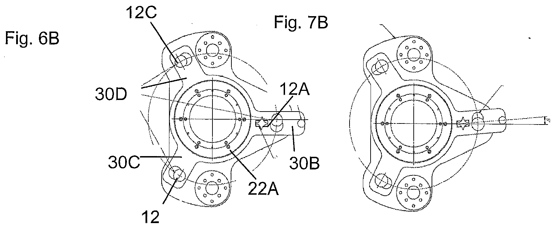

Bei der in Figuren 6 und 7 dargestellten alternativen Ausführungsform umfasst die Dispergiereinheit zusätzlich am Tragelement einen Deckel 20 zum Verschließen eines nicht dargestellten Behälters sowie oberhalb dieses Deckels 20 eine als Drehplatte 22 ausgebildete Drehverriegelung. Ferner ist eine Dissolverscheibe 24 am unteren Ende der Welle 4 montiert. Diese Drehplatte 22 ist ebenfalls plattenartig ausgebildet und umfasst einen die Welle 4 umschließenden Ring 22A, von dessen mittlerem Rotationspunkt sich drei um 120 Grad zueinander versetzte Haltearme 22B, 22C, 22D radial nach außen erstrecken. Jeder Haltearm 22B, 22C, 22D umfasst eine diesen durchdringende Aufnahmeöffnung, die jeweils einen breiteren Durchgangsabschnitt für das obere Ende der Stangen 12A, 12B, 12C des Mahlkorbs 10 und einen gegenüber dem Durchgangsabschnitt verjüngten Halteabschnitt aufweist, dessen Innendurchmesser angepasst ist, in der Verriegelungsstellung Hinterschnitte bzw. Nuten am oberen Ende der Stangen 12A, 12B, 12C zu hintergreifen.

So kann der mittels der drei Stangen 12A,12B, 12C an den Haltearmen 22B, 22C, 22D befestigte Mahlkorb 10 allein durch Drehung der Drehplatte 22 aus der in den Figuren 6A, 6B darstellten Verriegelungsstellung in die in Figuren 7A, 7B darstellte Entriegelungsstellung zur Freigabe des Mahlkorbs 10 überführt werden, wozu eine Drehung von 5 Grad ausreichend ist.

Die Erfindung stellt somit eine schnell demontierbare und wechselbare Feindispergiereinheit bereit, mit welcher die Durchlaufzeiten gesenkt werden können und somit den besonderen Anforderungen hinsichtlich Abmessungen und Gewicht im Produktionsbereich entsprochen wird. Insofern ist die vorgeschlagene Dispergiereinheit deutlich wirtschaftlicher gegenüber bestehenden Dispergiereinheiten. Neben den wirtschaftlichen Vorteilen soll den Kundenanforderungen an eine besonders flexibel einsetzbare Maschine Rechnung getragen werden, ohne die Nachteile einer im Produktraum verbleibenden Feindispergiereinheit. Die erfindungsgemäße Ausbildung kombiniert somit die Eigenschaften zweier Systeme zur Vor- und Feindispergierung, insbesondere ausgebildet als Dissolver und Korbmühle. Die schwere Produktionsfeindispergiereinheit kann für den Produktwechsel abgesenkt und dann auf einer vorzugsweise fahrbaren Transportaufnahme aufgenommen werden, welche anstelle eines Behälters unter die Maschine gefahren wird. Schnellwechselmittel, vorzugsweise ausgebildet als Schnellverschlüsse, insbesondere als Bajonettverschlüsse, ermöglichen das einfache Lösen der Feindispergiereinheit von der Dispergiereinheit, was auch durch einen Mann alleine erfolgen kann, weil die Trennebene gegenüber dem Stand der Technik auf die Höhe des Tragelements abgesenkt wurde.

Der Gegenstand der vorliegenden Erfindung ergibt sich nicht nur aus dem Gegenstand der einzelnen Ansprüche, sondern aus der Kombination der einzelnen Ansprüche untereinander. Alle in den Unterlagen - einschließlich der Zusammenfassung - offenbarten Angaben Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

### Bezugszeichenliste

- 1: Stativ
- 2: Motorkopf
- 4: Welle
- 6: Lagerflansch
- 6a: Befestigungsflansch
- 8: Tragelement
- 10: Mahlkorb
- 12A, 12B, 12C: Stange
- 13: Führungsstange
- 14: Deckel
- 16: Transportaufnahme
- 16A: Unterplatte
- 16B: Hubplatte
- 16C: Rolle
- 16D: Kraftzylinder
- 16E: Federstange
- 18: Bajonettverschluss
- 18A: Führungskullisse
- 18B: Eingang
- 18C: Stange
- 20: Deckel
- 22: Drehplatte
- 22A: Ring
- 22B, 22C, 22D: Haltearm
- 24: Dissolverscheibe

## Patentansprüche

1. Dispergiereinheit die für den Produktionsbereich ausgebildet ist, umfassend ein Stativ, umfassend einen Motorkopf (2) mit einem darin angeordneten Motor, welcher eine Welle (4) antreibt, einem Lagerflansch (6) zur Lagerung der Welle (4), der mit einem Oberende mit dem Motorkopf (2) verbunden ist, sowie einer über die Welle (4) antreibbaren Feindispergiereinheit, die mit einem Tragelement (8) verbindbar ist, **DADURCH GEKENNZEICHNET, DASS** der Lagerflansch (6) an einem Unterende ein Tragelement (8) aufweist, und dass das Tragelement (8) ausgebildet ist, um eine Trennebene vom unteren Ende des Motorkopfes an eine durch das Tragelement definierte Wechselebene zu verlegen und dass diese an dem Tragelement (8) Schnellwechselmittel zur lösbaren Befestigung der Feindispergiereinheit umfasst.

2. Dispergiereinheit nach Anspruch 1, **DADURCH GEKENNZEICHNET, DASS** die Schnellwechselmittel an dem Tragelement (8) angeordnet sind.

3. Dispergiereinheit nach Anspruch 1 oder 2, **DADURCH GEKENNZEICHNET, DASS** die Schnellwechselmittel einen Bajonettverschluss (18) umfassen.

4. Dispergiereinheit nach Anspruch 1 oder 2, **DADURCH GEKENNZEICHNET, DASS** die Schnellwechselmittel eine Kulissenführung mit einer dieser geführten Stange oder einem Stift umfassen.

5. Dispergiereinheit nach einem der vorhergehenden Ansprüche, **DADURCH GEKENNZEICHNET, DASS** diese einen Deckel (14) zum Verschließen eines Behälters umfasst.

6. Dispergiereinheit nach Anspruch 5, **DADURCH GEKENNZEICHNET, DASS** der Deckel (14) an dem Tragelement (8) befestigt ist.

7. Dispergiereinheit nach Anspruch 5 oder 6, **DADURCH GEKENNZEICHNET, DASS** der Deckel (14) Mittel zur Produktzuführung und/oder Medienanschlüsse umfasst.

8. Dispergiereinheit nach einem der vorhergehenden Ansprüche, **DADURCH GEKENNZEICHNET, DASS** die Feindispergiereinheit ein Gestänge umfasst, welches zur Medienführung ausgebildet ist.

9. Dispergiereinheit nach einem der vorhergehenden Ansprüche, **DADURCH GEKENNZEICHNET, DASS** das Tragelement (8) eine Drehverriegelung umfasst.

10. Dispergiereinheit nach Anspruch 9, **DADURCH GEKENNZEICHNET, DASS** die Drehverriegelung eine Drehplatte umfasst.

## Claims

1. Dispersing unit which is designed for the production area, comprising a stand comprising a motor head (2) with a motor arranged therein, which motor drives a shaft (4), a bearing flange (6) for supporting the shaft (4), which bearing flange is connected to the motor head (2) at an upper end, and a fine dispersing unit which can be driven via the shaft (4) and can be connected to a supporting element (8), ***characterized in that*** the bearing flange (6) has a support member (8) at a lower end and **in that** the support member (8) is adapted to displace a parting plane from the lower end of the motor head to an alternating plane defined by the support member and **in that** it comprises quick-change means on the support member (8) for releasably securing the fine dispersion unit.

2. Dispersion unit according to claim 1, ***characterized in that*** the quick-change means are arranged on the supporting element (8).

3. Dispersing unit according to claim 1 or 2, ***characterized in that*** the quick-change means comprise a bayonet lock (18).

4. Dispersion unit according to claim 1 or 2, ***characterized in that*** the quick-change means comprise a slotted guide with a rod or a pin guided therein.

5. Dispersing unit according to one of the preceding claims, ***characterized in that*** it comprises a lid (14) for closing a container.

6. Dispersing unit according to claim 5, ***characterized in that*** the lid (14) is attached to the supporting element (8).

7. Dispersing unit according to claim 5 or 6, ***characterized in that*** the lid (14) comprises means for product supply and/or media connections.

8. Dispersing unit according to one of the preceding claims, ***characterized in that*** the fine dispersing unit comprises a linkage which is designed for media guidance.

9. Dispersing unit according to one of the preceding claims, ***characterized in that*** the supporting element (8) comprises a rotary lock.

10. Dispersing unit according to claim 9, ***characterized in that*** the rotary lock comprises a rotary plate.

## Revendications

1. Unité de dispersion conçue pour la zone de production, comprenant un statif comprenant une tête de moteur (2) avec un moteur qui y est disposé et qui entraîne un arbre (4), une bride de palier (6) pour supporter l'arbre (4), laquelle bride de palier est reliée à la tête de moteur (2) à une extrémité supérieure, et une unité de dispersion fine qui peut être entraînée par l'arbre (4) et peut être reliée à un élément porteur (8), ***caractérisé en ce que*** la bride de palier (6) comporte un élément porteur (8) à une extrémité inférieure et **en ce que** l'élément porteur (8) est conçu pour déplacer un plan de séparation de l'extrémité inférieure de la tête du moteur à un plan de changement défini par l'élément porteur et **en ce qu'**il comprend des moyens à changement rapide sur l'élément porteur (8) pour fixer de manière amovible l'unité de dispersion fine.

2. Unité de dispersion selon la revendication 1, ***caractérisée en ce que*** les moyens de changement rapide sont disposés sur l'élément porteur (8).

3. Unité de dispersion selon la revendication 1 ou 2, ***caractérisée en ce que*** les moyens de changement rapide comprennent une fermeture à baïonnette (18).

4. Unité de dispersion selon la revendication 1 ou 2, ***caractérisée en ce que*** les moyens de changement rapide comprennent un guide à coulisse avec une tige ou une broche guidée dans celui-ci.

5. Unité de dispersion selon l'une des revendications précédentes, *caractérisée en ce qu*'elle comprend un couvercle (14) pour fermer un récipient.

6. Unité de dispersion selon la revendication 5, ***caractérisée en ce que*** le couvercle (14) peut être fixé sur l'élément porteur (8).

7. Unité de dispersion selon la revendication 5 ou 6, ***caractérisée en ce que*** le couvercle (14) comporte des moyens pour l'alimentation en produit et/ou des raccordements pour milieux.

8. Unité de dispersion selon l'une des revendications précédentes, ***caractérisée en ce que*** l'unité de dispersion fine comprend un système de tiges qui est conçu pour guider les milieux.

9. Unité de dispersion selon l'une des revendications précédentes, ***caractérisée en ce que*** l'élément porteur (8) comprend un verrou rotatif.

10. Unité de dispersion selon la revendication 9, ***caractérisée en ce que*** le verrou rotatif comprend une plaque rotative.
